# EUROPÄISCHE PATENTANMELDUNG

(11) **EP 4 241 751 A1**
(43) Veröffentlichungstag der Anmeldung: **13.09.2023**
(21) Anmeldenummer: 23160367.1
(22) Anmeldetag: 07.03.2023
(51) Int. Cl.: A61G 3/00, B60N 2/10, B60N 2/40

(54) **GELÄNDEGÄNGIGES KRAFTFAHRZEUG ZUM RETTUNGSTRANSPORT EINES PATIENTEN**

(30) Priorität: 09.03.2022 DE 202022101299 U
(71) Anmelder: BZS GmbH der unabhängige Fahrzeugdienstleister, 37574 Einbeck (DE)
(72) Erfinder:
(74) Vertreter: Callies, Rainer Michael

(57) **Zusammenfassung**

Geländegängiges Kraftfahrzeug (1) zum Rettungstransport eines Patienten, aufweisend eine Fahrersitzposition (9) für eine das Fahrzeug führende Person, eine an einem Heck des Fahrzeugs angeordnete Haltevorrichtung (7) für eine Trage für den Patienten und eine für eine Begleitperson vorgesehene Begleitersitzposition (10), die zwischen der Fahrersitzposition (9) und der Trage-Haltevorrichtung (7) angeordnet ist und eine Rückenstütze aufweist, die als Rückenlehne für die Begleitperson dienen kann. Die Rückenstütze ist für die Durchführung des Transports des Patienten so verstellbar, dass sie zwecks Betreuung des Patienten einen in Richtung des Fahrzeughecks ausgerichteten Sitz für die Begleitperson bildet.

## Beschreibung

Die Erfindung bezieht sich auf ein Kraftfahrzeug nach dem Oberbegriff des Anspruchs 1. Zur Rettung von kranken oder verletzten Personen aus einem unwegsamen Gelände werden spezielle Kraftfahrzeuge benötigt, die sich durch Geländegängigkeit auszeichnen. Solche Fahrzeuge werden beispielsweise in Bergregionen oder auch auf einem Strandgelände eingesetzt. Sie weisen nicht nur eine Fahrersitzposition auf, sondern auch eine Sitzposition für eine Begleitperson, die bei dem vorgesehenen Rettungstransport der besagten Person (im Folgenden Patient genannt) diese während der Fahrt betreut. Zudem weisen solche Kraftfahrzeuge eine Haltevorrichtung für eine Trage für den Patienten auf. Herkömmlich wird beim Transport des Patienten dessen Betreuung dadurch gewährleistet, dass die Begleitperson neben dem Fahrzeug hergeht und entsprechende Betreuungsmaßnahmen gegenüber dem Patienten vornehmen kann. Nachteilig ist dabei natürlich, dass die Transportgeschwindigkeit im Wesentlichen nur einer Gehgeschwindigkeit entsprechen kann.

Ferner ist auch bekannt, einen Anhänger für den Transport des Patienten zu verwenden. Dies ist allerdings insbesondere in bergigem Gelände fahrtechnisch mit Problemen verbunden.

Der Erfindung liegt daher die Aufgabe zugrunde, ein gattungsgemäßes Kraftfahrzeug zur Verfügung zu stellen, das es auf einfache Weise erlaubt, dass die Begleitperson während des Transports des Patienten diesen so betreuen kann, dass sie in dem Patienten zugewandter Sitzposition auf dem Kraftfahrzeug mitfahren kann.

Diese Aufgabe wird durch die Merkmale des Anspruchs 1 gelöst. Das zum rettenden Transport eines Patienten dienende Fahrzeug ist geländegängig und weist eine Sitzposition für eine Person auf, die das Fahrzeug fährt bzw. führt. An einem Heck des Fahrzeugs ist eine Haltevorrichtung für eine Trage angeordnet, in der der Patient während des Transports gelagert ist. Zudem weist das Kraftfahrzeug auch eine Sitzposition für eine Begleitperson auf. Diese Begleitersitzposition ist zwischen der Fahrersitzposition und der Haltevorrichtung für die Trage angeordnet und weist eine Rückenstütze auf. Diese Rückenstütze ist dazu vorgesehen, von der Begleitperson bei der Anfahrt zu dem Patienten als Rückenlehne verwendet zu werden. Die Rückenstütze ist derartig verstellbar, dass sie zur Betreuung des Patienten während des Transports einen Sitz für die Begleitperson bildet, der in Richtung des Fahrzeughecks und somit der Patiententrage ausgerichtet ist. Im Folgenden wird auch im Zusammenhang mit dieser Funktion als Sitz der Begriff "Rückenstütze" verwendet.

Dadurch kann in einfacher Weise erreicht werden, dass beim Transport des Patienten die Begleitperson, die sich um den Patienten kümmert, auf dem Kraftfahrzeug mitfahren kann. Dies bedeutet eine erhebliche und gegebenenfalls für die Rettung des Patienten lebensentscheidende Zeitersparnis.

Bei dem Kraftfahrzeug kann es sich insbesondere um ein Quadricycle (sog. Quad), ein All-Terrain-Vehicle (ATV) oder um ein Krad handeln.

Die Rückenstütze kann eine Halterung und ein gepolstertes Element aufweisen, welches zum Körperkontakt, entweder durch Anlehnung des Rückens oder als Sitzfläche, vorgesehen ist.

Vorzugsweise ist die Halterung so ausgelegt, dass der Abstand des gepolsterten Elements zu der Trage-Haltevorrichtung veränderbar ist. Dadurch kann der richtige Abstand eingestellt werden, wenn das gepolsterte Element als Sitz verwendet wird. Die Veränderbarkeit des Abstandes des gepolsterten Elements zu der Trage-Haltevorrichtung kann aber auch so gestaltet sein, dass die Rückenstütze von der das Fahrzeug führenden Person als Rückenlehne verwendet werden kann.

Vorzugsweise weist die Halterung der Rückenstütze zwei längliche Führungseisen auf, die parallel zueinander ausgerichtet sind und an denen das gepolsterte Element befestigt ist. Dabei ist ferner eine ortsfeste Führungsrohreinheit mit zwei Führungsrohren vorgesehen, die die Führungseisen hält, indem diese verschiebbar in den Führungsrohren angeordnet sind. Auf diese Weise ist eine gute Verstellbarkeit des gepolsterten Elements gegeben. Die Führungseisen können hohl sein, um Gewicht zu sparen. Die Führungseisen und die Führungsrohre können jeweils einen kreisförmigen oder einen rechteckigen bzw. quadratischen Querschnitt haben.

Die Führungsrohreinheit kann an einem Gestell der Haltevorrichtung für die Patiententrage befestigt sein. Die Befestigung kann durch ein Anschrauben oder ein Anschweißen gegeben sein. Durch diese effiziente Nutzung der Tragkraft der Haltevorrichtung können die für die Realisierung der Erfindung erforderlichen baulichen Veränderungen eines herkömmlichen Kraftfahrzeugs relativ gering gehalten werden.

Vorzugsweise weist die Führungsrohreinheit einen Bolzen auf, der durch eine Feder vorgespannt ist und von einem Benutzer so betätigt werden kann, dass er in zwei oder mehr Löcher, die in einem der Führungseisen angeordnet sind, einrasten kann, um dadurch das gepolsterte Element in seinem Abstand zu der Trage-Haltevorrichtung festzulegen. Die Anzahl der Löcher entspricht dabei den möglichen Abstandspositionen des gepolsterten Elements.

Vorzugsweise weist der Bolzen einen Kopf zum Ziehen entgegen der Federkraft auf, der händisch durch einen Benutzer ohne Verwendung eines Werkzeugs betätigt werden kann.

Vorzugsweise ist das gepolsterte Element an einer Aufnahme befestigt, die an der Halterung der Rückenstütze angeordnet ist und von einer vertikalen Ausrichtungsposition, bei der das Element in Vorwärtsfahrtrichtung sitzend als Rückenlehne dient, in eine horizontale Ausrichtungsposition, bei der das Element als Sitz dient, geschwenkt werden kann bzw. umgekehrt. Diese Aufnahme kann insbesondere im Wesentlichen ein Flachteil aus Stahl sein. Vorzugsweise weist die Aufnahme ein Rohrstück auf, durch das hindurch eine quer ausgerichtete Drehstange verläuft. Diese Drehstange kann an einem Ende der Führungseisen so angeordnet sein, dass sie beide Führungseisen miteinander verbindet.

Auch das Rohrstück weist vorzugsweise einen durch eine Feder vorgespannten Bolzen auf. Dabei ist dieser zur Betätigung durch einen Benutzer vorgesehen, so dass der Bolzen in Löcher der Drehstange einrasten kann, die einer Festlegung der Aufnahme in der vertikalen bzw. der horizontalen Ausrichtungsposition entsprechen. Vorzugsweise besitzt auch dieser Bolzen einen Kopf zum Ziehen zur händischen, werkzeuglosen Betätigung.

Die Trage-Haltevorrichtung kann Kniepolster aufweisen, die zum Schutz der Knie der Begleitperson bei der Betreuung eines Patienten während des Transports dienen.

Bei der Trage kann es sich insbesondere um eine Korbtrage handeln. Diese kann zweiteilig sein, wobei beide Korbkomponenten zusammensteckbar sind.

Im Folgenden wird die Erfindung anhand zweier Ausführungsbeispiele näher erläutert, wobei auf die Figuren Bezug genommen wird. Es zeigen:
Fig. 1 eine perspektivische Ansicht eines ersten erfindungsgemäßen Quads mit einer Haltevorrichtung für eine Patiententrage und einer verstellbaren Rückenstütze, teilweise in Explosionsdarstellung,
Fig. 2 eine perspektivische Ansicht des Quads der Fig. 1, wobei die Rückenstütze in montierter Position als Rückenlehne für eine in Vorwärtsfahrtrichtung sitzende Begleitperson dargestellt ist,
Fig. 3 eine Teildarstellung des Quads der Fig. 2, wobei insbesondere eine Fahrersitzposition, die Trage-Haltevorrichtung und die Rückenstütze in der Position gemäß Fig. 2 in Draufsicht dargestellt sind,
Fig. 4 eine Seitenansicht entsprechend der Teildarstellung gemäß Fig. 3,
Fig. 5 eine perspektivische Ansicht wie in Fig. 2, wobei jedoch die Rückenstütze sich in einer Position befindet, in der sie einer das Quad lenkenden Person als Rückenlehne dient,
Fig. 6 eine Ansicht wie in Fig. 5, wobei jedoch ein gepolstertes Element der Rückenstütze sich in einer Position während eines Schwenkvorgangs aus einer vertikalen Ausrichtungsposition in eine horizontale Ausrichtungsposition befindet,
Fig. 7 eine Ansicht wie in Fig. 6, wobei sich das gepolsterte Element in der horizontalen Ausrichtungsposition befindet,
Fig. 8 eine Teildarstellung des Quads der Fig. 7, wobei insbesondere eine Fahrersitzposition, die Trage-Haltevorrichtung und die Rückenstütze in Draufsicht dargestellt sind,
Fig. 9 eine Seitenansicht der Teildarstellung gemäß Fig. 8,
Fig. 10 eine perspektivische Teildarstellung eines zweiten erfindungsgemäßen Quads, mit im Vergleich zu dem ersten Quad der gleichen Fahrersitzposition, einer geringfügig unterschiedlichen Trage-Haltevorrichtung, der gleichen Rückenstütze und einer befestigten Patiententrage.

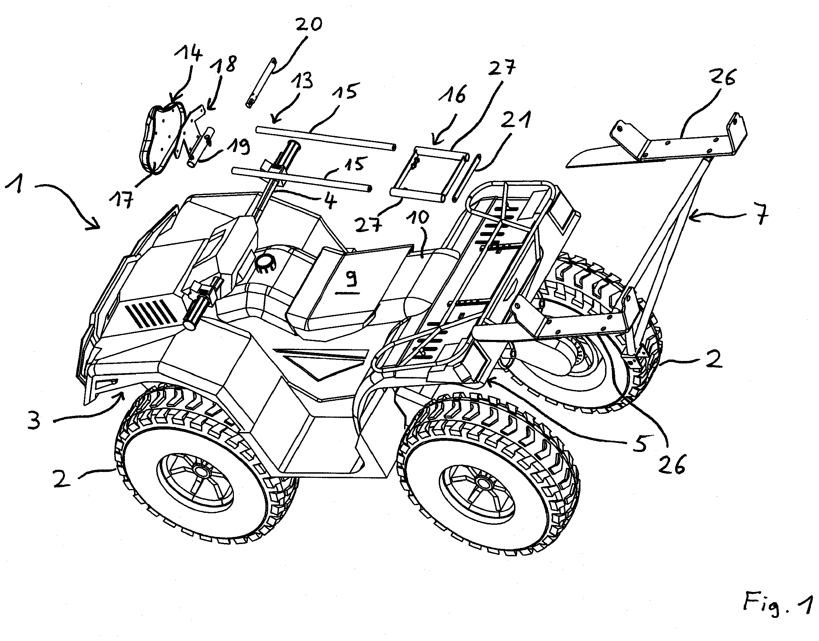

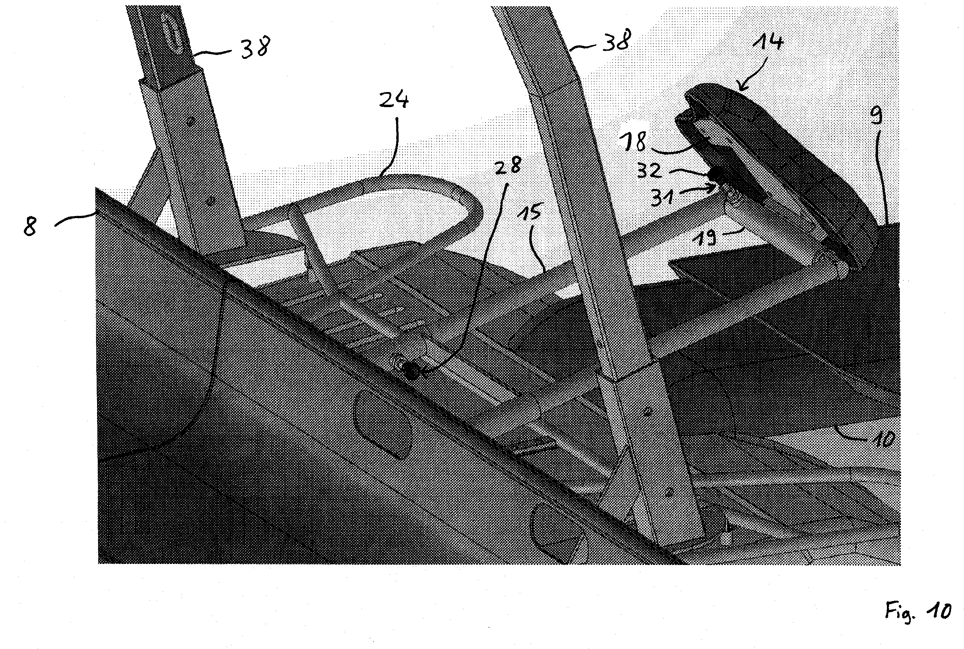

In den Figuren sind gleiche Teile mit gleichen Bezugszeichen bezeichnet. Das Quad (Quadricycle) ist mit dem Bezugszeichen 1 bezeichnet. Es weist, wie insbesondere aus Fig. 1 ersichtlich ist, vier Räder 2 zur Fortbewegung in unwegsamem Terrain auf, ferner einen Frontbereich 3 mit einem Lenker 4 und ein Heck 5. Am Heck 5 ist eine Haltevorrichtung 7 für eine Patiententrage 8 (siehe Fig. 10) angeordnet. Das Quad 1 besitzt eine Sitzposition 9 für eine das Quad 1 fahrende Person und dahinter eine in Richtung des Frontbereichs 3 ausgerichtete Sitzposition 10 für eine Begleitperson.

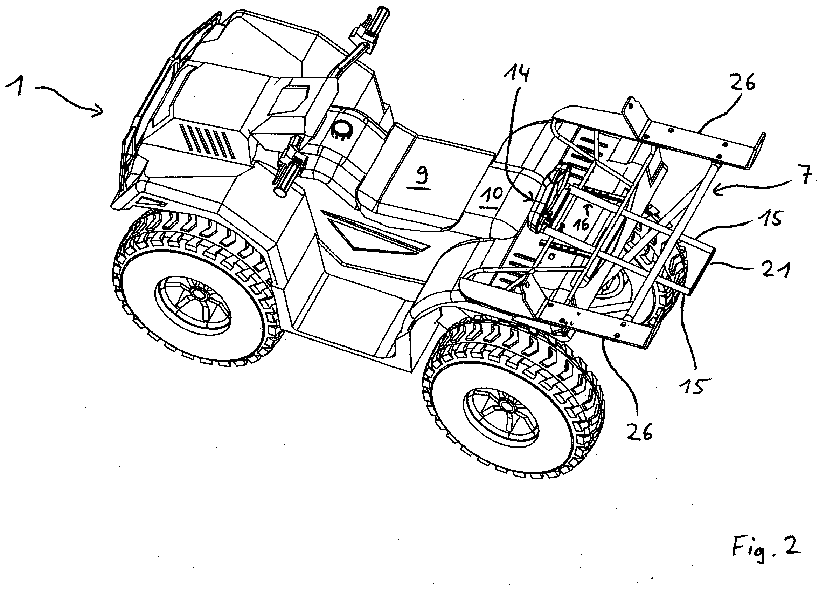

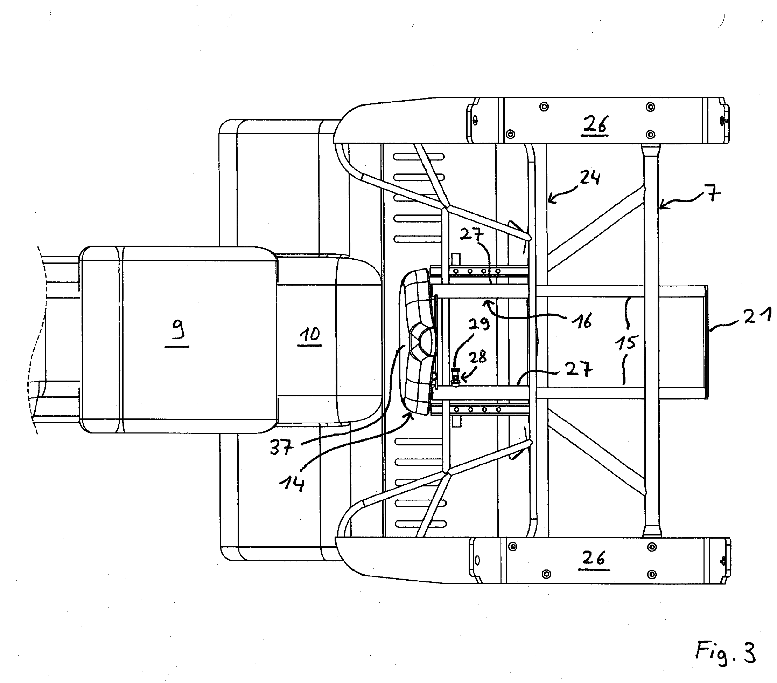

Erfindungsgemäß ist ferner eine Rückenstütze 13 vorgesehen. Diese weist ein gepolstertes Element 14 sowie als Teil einer Halterung zwei parallel ausgerichtete Führungseisen 15 und eine Führungsrohreinheit 16 auf. Das gepolsterte Element 14 besitzt eine Metallplatte 17, mittels derer es an einer Aufnahme 18 der Rückenstütze 13 festgeschraubt ist. Die Aufnahme 18 hat ein Rohrstück 19, durch das hindurch eine Drehstange 20 verläuft, die quer ausgerichtet zwei Enden der Führungseisen 15 verbindet. Gegenüberliegende Enden der Führungseisen 15 sind durch eine Endstange 21 verbunden, wie insbesondere aus den Fig. 2 und 3 ersichtlich ist. Die Drehstange 20 und die Endstange 21 sind ebenfalls Teil der Halterung der Rückstütze 13.

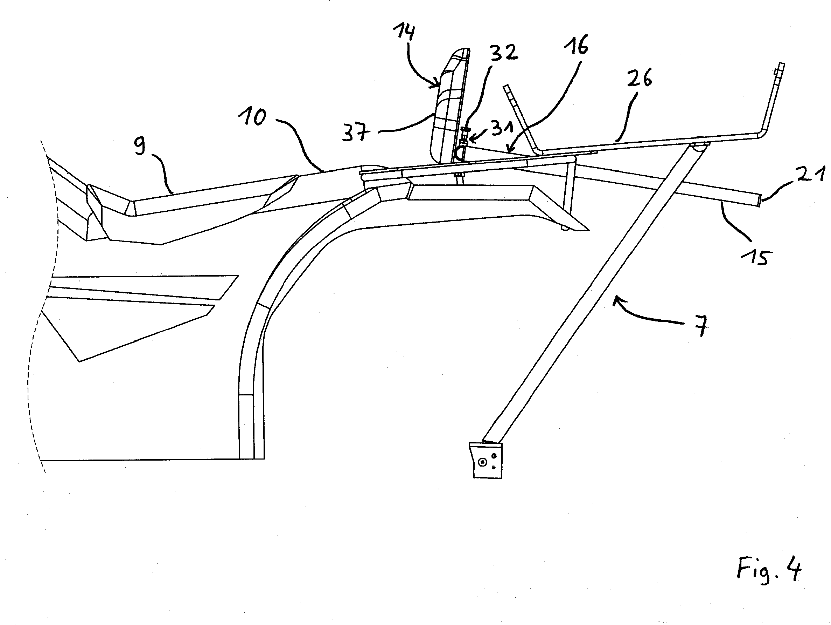

Wie in Fig. 3 erkennbar ist, ist die Führungsrohreinheit 16 an einem Gestell 24 der Haltevorrichtung 7 angeschweißt. Die Haltevorrichtung 7 weist ferner eine Aufnahme 26 für die Patiententrage 8 auf (siehe Fig. 3 und 4.).

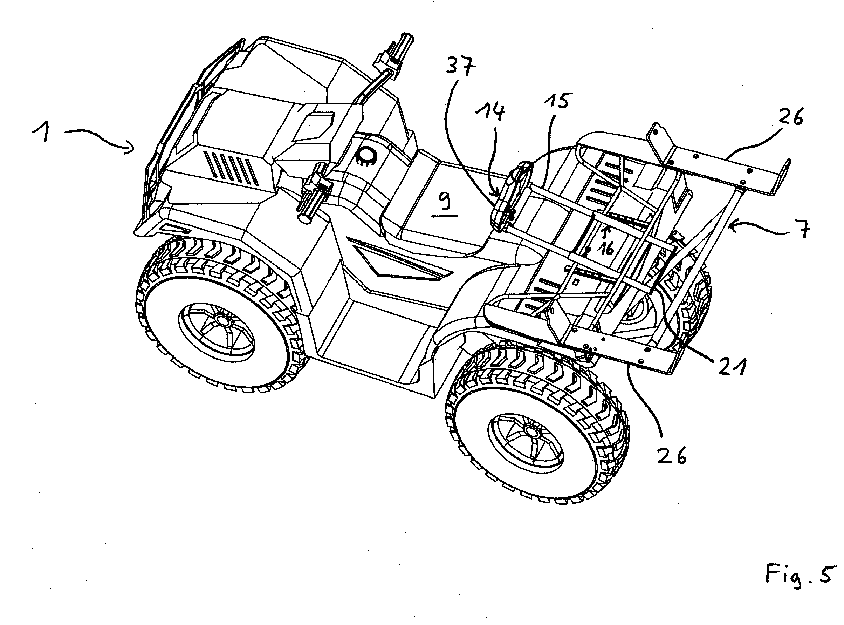

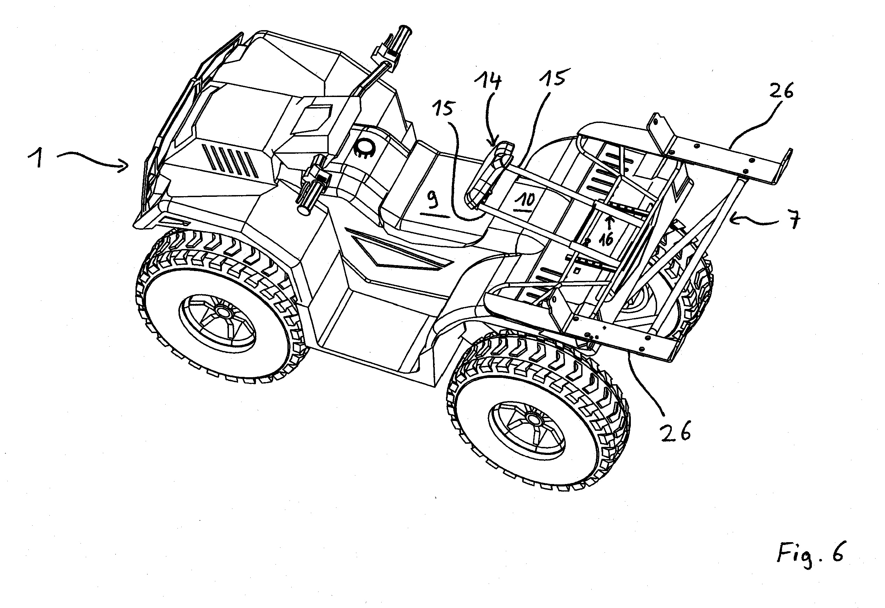

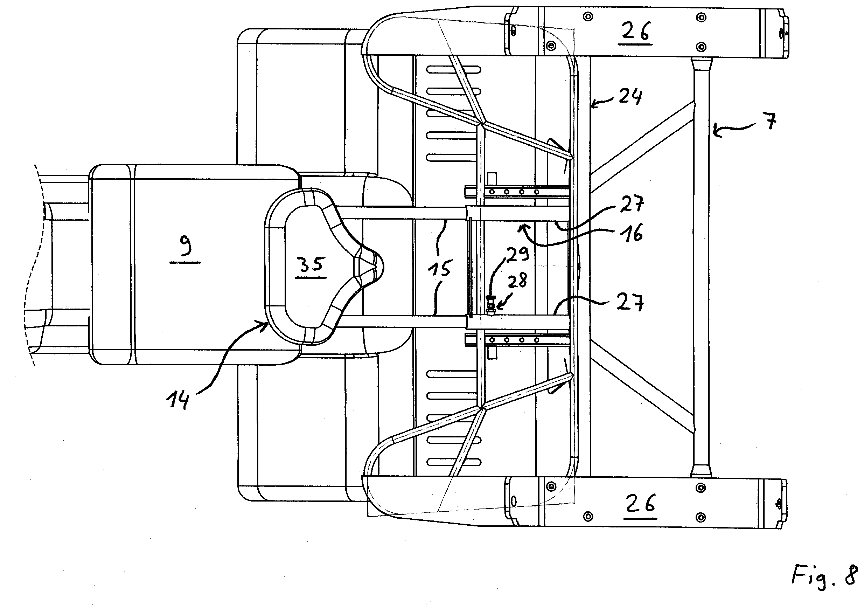

Wie durch Vergleich der Fig. 2 und 5 ersichtlich ist, kann das gepolsterte Element 14 in seinem Abstand zu der Haltevorrichtung 7 dadurch verändert werden, dass die Führungseisen 15 innerhalb der Führungsrohreinheit 16, die zwei Führungsrohre 27 aufweist, verschiebbar sind. Während in Fig. 2 der Abstand des gepolsterten Elements 14 zu der Haltevorrichtung 7 am geringsten ist, ist er in der Fig. 5 so groß, dass das gepolsterte Element 14 als Lehne für den Rücken der Person, die das Quad 1 führt, dienen kann. In Fig. 6 ist der besagte Abstand maximal, wobei die Endstange 21 gegen die Führungsrohreinheit 16 anliegt. Wie insbesondere aus den Fig. 3, 8 und 10 ersichtlich ist, weist die Führungsrohreinheit 16 zur Veränderung des Abstandes des gepolsterten Elements 14 von der Haltevorrichtung 7 bzw. zum Verschieben der Führungseisen 15 innerhalb der Führungsrohre 27 einen Bolzen 28 auf, der durch eine Feder (nicht gezeigt) vorgespannt ist und einen Kopf 29 zum Ziehen durch einen Benutzer aufweist. Der Bolzen 28 greift in Löcher eines der Führungseisen 15 ein, wobei die Löcher die oben genannten unterschiedlichen Abstände des gepolsterten Elements 14 von der Haltevorrichtung 7 definieren. Mittels Eingriffs des Bolzens 28 in die Löcher wird somit das gepolsterte Element 14 in seinem Abstand zu der Haltevorrichtung 7 festgelegt.

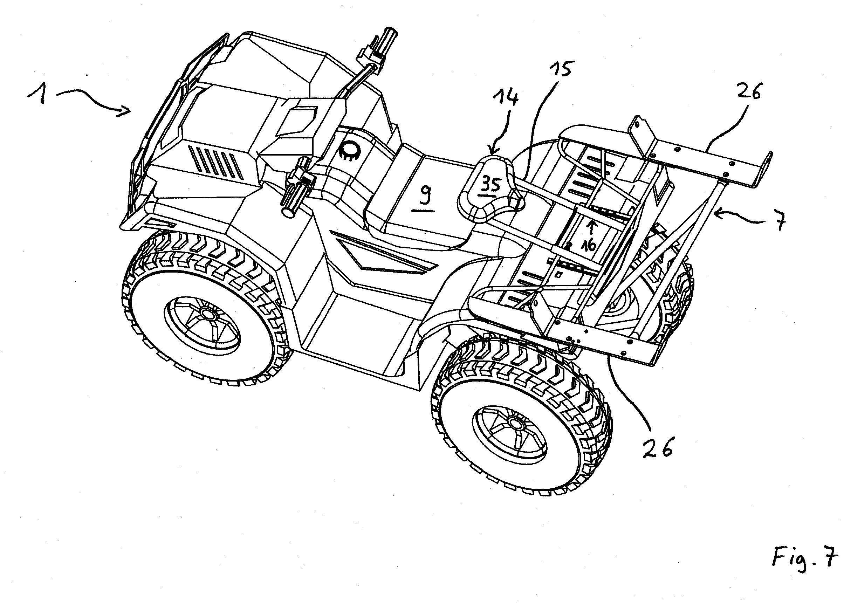

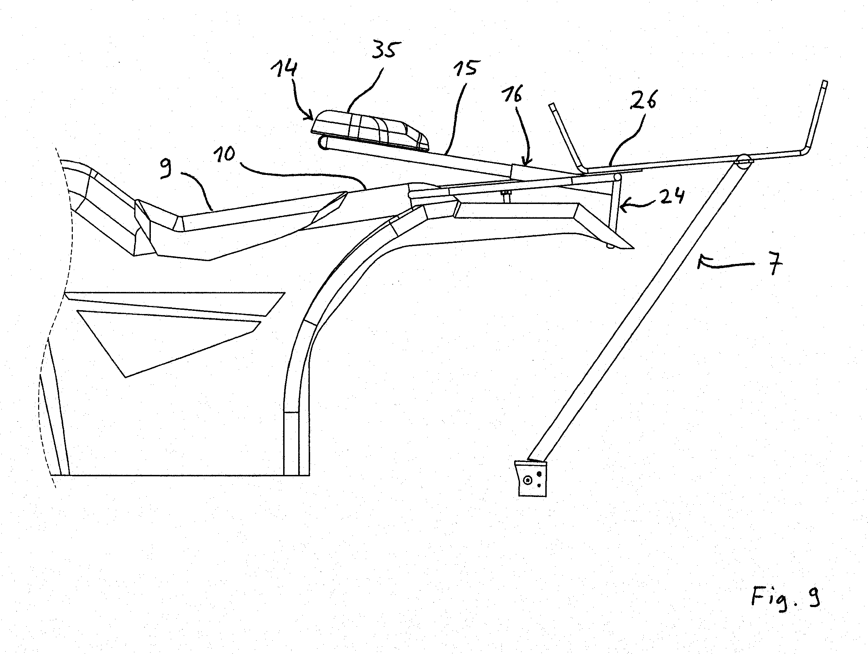

Einen solchen Bolzen 31 mit einem Kopf 32 weist auch das Rohrstück 19 auf, wie insbesondere aus den Fig. 4 und 10 ersichtlich ist. Auch dieser Bolzen 31 ist durch eine Feder (nicht gezeigt) vorgespannt und kann mittels des Kopfes 32 durch einen Benutzer betätigt werden, nämlich aus einem von zwei Löchern in der Drehstange 20 herausgezogen werden, um die Ausrichtungsposition des gepolsterten Elements 14 zu verändern. Die beiden möglichen Ausrichtungspositionen des gepolsterten Elements 14 sind eine horizontale Ausrichtungsposition, in der das gepolsterte Element 14 einen entgegen der Vorwärtsfahrtrichtung ausgerichteten Sitz 35 für die Begleitperson zur Betreuung eines Patienten bei dessen Transport bildet (siehe Fig. 7 bis 9) sowie eine vertikale Ausrichtungsposition, in der das gepolsterte Element 14 als Lehne 37 für den Rücken der fahrzeugführenden Person (siehe Fig. 5) oder der bei der Anfahrt zu der zu rettenden Person in Vorwärtsfahrtrichtung sitzenden Begleitperson (siehe Fig. 2 bis 4) bildet.

In den Fig. 6 und 10 ist das gepolsterte Element 14 gezeigt, nachdem die Arretierung in der vertikalen Ausrichtungsposition gelöst worden ist und während es in Richtung der horizontalen Ausrichtungsposition bewegt wird. In den Fig. 7, 8 und 9 ist zu sehen, dass eine den Patienten betreuende Begleitperson unmittelbar an einer Längsseite der in Fig. 10 teilweise gezeigten Patiententrage 8 entgegen der Vorwärtsfahrtrichtung sitzen kann und sich an dem Gestell 24 der Haltevorrichtung 7 bei Bedarf festhalten kann, wobei auch noch Kniepolster (nicht gezeigt) für die Begleitperson vorgesehen sein können.

Das zweite Quad, das in Teildarstellung in Fig. 10 gezeigt ist, weist im Vergleich zu dem ersten Quad 1 noch einen Bügel 38 auf, an dem in einem querverlaufenden Abschnitt insbesondere Leuchten (nicht gezeigt) zum Ausleuchten einer Einsatzstelle angebracht sein können.

Weitere Merkmale des Quads 1, die aus den Figuren ersichtlich und allgemein bekannt sind, werden hier nicht weiter beschrieben.

### Bezugszeichenliste:

- 1: Quad
- 2: Räder
- 3: Frontbereich
- 4: Lenker
- 5: Heck
- 7: Haltevorrichtung für 8
- 8: Patiententrage
- 9: Fahrersitzposition
- 10: Begleitersitzposition
- 13: Rückenstütze
- 14: gepolstertes Element
- 15: Führungseisen
- 16: Führungsrohreinheit
- 17: Metallplatte von 14
- 18: Aufnahme
- 19: Rohrstück von 18
- 20: Drehstange
- 21: Endstange
- 24: Gestell von 7
- 26: Trageaufnahme
- 27: Führungsrohre von 16
- 28: Bolzen
- 29: Kopf von 28
- 31: Bolzen
- 32: Kopf von 31
- 35: Sitz
- 37: Lehne
- 38: Bügel

## Patentansprüche

1. Geländegängiges Kraftfahrzeug (1) zum Rettungstransport eines Patienten, aufweisend
eine Fahrersitzposition (9) für eine das Fahrzeug (1) führende Person,
eine an einem Heck (5) des Fahrzeugs (1) angeordnete Haltevorrichtung (7) für eine Trage (8) für den Patienten,
eine für eine Begleitperson vorgesehene Begleitersitzposition (10), die zwischen der Fahrersitzposition (9) und der Trage-Haltevorrichtung (7) angeordnet ist und eine Rückenstütze (13), die als Rückenlehne (37) für die Begleitperson dienen kann, aufweist,
**dadurch gekennzeichnet, dass** die Rückenstütze (13) für die Durchführung des Transports des Patienten so verstellbar ist, dass sie zwecks Betreuung des Patienten einen in Richtung des Fahrzeughecks (5) ausgerichteten Sitz (35) für die Begleitperson bildet.

2. Kraftfahrzeug (1) nach Anspruch 1,
**dadurch gekennzeichnet, dass** es sich bei ihm um ein Quadricycle (Quad), ein All-Terrain-Vehicle (ATV) oder ein Krad handelt.

3. Kraftfahrzeug (1) nach Anspruch 1 oder 2,
**dadurch gekennzeichnet, dass** die Rückenstütze (13) eine Halterung und ein zum Körperkontakt vorgesehenes, gepolstertes Element (14) aufweist.

4. Kraftfahrzeug (1) nach Anspruch 3,
**dadurch gekennzeichnet, dass** die Halterung so ausgelegt ist, dass der Abstand des gepolsterten Elements (14) zu der Trage-Haltevorrichtung (7) veränderbar ist.

5. Kraftfahrzeug (1) nach Anspruch 4,
**dadurch gekennzeichnet, dass** die Halterung zwei längliche, parallel ausgerichtete Führungseisen (15) aufweist, an denen das gepolsterte Element (14) befestigt ist und die durch eine ortsfeste Führungsrohreinheit (16) gehalten sind, welche zwei Führungsrohre (27) aufweist, in denen die Führungseisen (15) verschiebbar angeordnet sind.

6. Kraftfahrzeug (1) nach Anspruch 5,
**dadurch gekennzeichnet, dass** die Führungsrohreinheit (16) an einem Gestell (24) der Trage-Haltevorrichtung (7) befestigt ist.

7. Kraftfahrzeug (1) nach Anspruch 6,
**dadurch gekennzeichnet, dass** die Führungsrohreinheit (16) an dem Gestell (24) angeschraubt oder angeschweißt ist.

8. Kraftfahrzeug (1) nach einem der Ansprüche 5 bis 7,
**dadurch gekennzeichnet, dass** die Führungsrohreinheit (16) zur Abstandsveränderbarkeit des gepolsterten Elements (14) einen durch eine Feder vorgespannten Bolzen (28) aufweist, der durch einen Benutzer so betätigt werden kann, dass er in Löcher eines der Führungseisen (15) zur Festlegung des gepolsterten Elements (14) einrastet.

9. Kraftfahrzeug (1) nach Anspruch 8,
**dadurch gekennzeichnet, dass** der Bolzen (28) einen werkzeuglos, per Hand betätigbaren Kopf (29) zum Ziehen aufweist.

10. Kraftfahrzeug (1) nach einem der Ansprüche 3 bis 9,
**dadurch gekennzeichnet, dass** das gepolsterte Element (14) an einer Aufnahme (18) befestigt ist, die an der Halterung angeordnet und von einer vertikalen Ausrichtungsposition in eine horizontale Ausrichtungsposition und umgekehrt schwenkbar ist.

11. Kraftfahrzeug (1) nach Anspruch 10,
**dadurch gekennzeichnet, dass** die Aufnahme (18) ein Rohrstück (19) aufweist, durch das hindurch eine quer ausgerichtete Drehstange (20) verläuft.

12. Kraftfahrzeug (1) nach Anspruch 11,
**dadurch gekennzeichnet, dass** das Rohrstück (19) einen durch eine Feder vorgespannten Bolzen (31) aufweist, der durch einen Benutzer so betätigt werden kann, dass er in Löcher der Drehstange (20) zur Festlegung der Aufnahme (18) in der vertikalen bzw. horizontalen Ausrichtungsposition einrastet.

13. Kraftfahrzeug (1) nach Anspruch 12,
**dadurch gekennzeichnet, dass** der Bolzen (31) einen werkzeuglos, per Hand betätigbaren Kopf (32) zum Ziehen aufweist.

14. Kraftfahrzeug (1) nach einem der vorhergehenden Ansprüche,
**dadurch gekennzeichnet, dass** die Trage-Haltevorrichtung (7) Kniepolster zum Schutz der Knie der Begleitperson bei der Betreuung eines Patienten während dessen Transports aufweist.

15. Kraftfahrzeug (1) nach einem der vorhergehenden Ansprüche,
**dadurch gekennzeichnet, dass** es sich bei der Trage (8) um eine Korbtrage handelt, die zwei zusammensteckbare Korbkomponenten aufweist.
